# EUROPÄISCHE PATENTSCHRIFT

(11) **EP 2 673 733 B1**
(45) Veröffentlichungstag und Bekanntmachung des Hinweises auf die Patenterteilung: **06.04.2016**
(21) Anmeldenummer: 12716321.0
(22) Anmeldetag: 11.04.2012
(51) Int. Cl.: G06F 21/87, G05B 9/02

(54) **TAMPERSCHUTZVORRICHTUNG ZUM TAMPERSCHUTZ EINES FELDGERÄTS**
TAMPER PROTECTION DEVICE FOR PROTECTING A FIELD DEVICE AGAINST TAMPERING
DISPOSITIF DE PROTECTION ANTI-MANIPULATION POUR PROTÉGER UN APPAREIL DE TERRAIN CONTRE UNE MANIPULATION MALVEILLANTE

(30) Priorität: 18.04.2011 DE 102011007571
(43) Veröffentlichungstag der Anmeldung: 18.12.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2012/056516
(87) Internationale Veröffentlichungsnummer: WO 2012/143270

(56) Entgegenhaltungen:
- WO-A1-2004/078787
- WO-A2-2004/055918
- A-R SADEGHI ET AL: "Reconfigurable Physical Unclonable Functions - Enabling technology for tamper-resistant storage", HARDWARE-ORIENTED SECURITY AND TRUST, 2009. HOST '09. IEEE INTERNATIONAL WORKSHOP ON, IEEE, PISCATAWAY, NJ, USA, 27. Juli 2009 (2009-07-27), Seiten 22-29, XP031520804, ISBN: 978-1-4244-4805-0

## Beschreibung

Die Erfindung betrifft eine Tamperschutzvorrichtung zum Tamperschutz eines Feldgeräts, ein Verfahren zur Herstellung eines Feldgeräts mit einem Tamperschutz und ein Tamperschutzsystem sowie Verwendungen einer Tamperschutzvorrichtung.

Feldgeräte werden in vielfältigen Bereichen der Technik verwendet, beispielsweise in Form von Signalanlagen als Ampeln, Bahnsignale oder dergleichen. Feldgeräte sind üblicherweise mit einer Steuervorrichtung, beispielsweise einer Leitstelle oder ähnlichem verbunden, um die Feldgeräte anhand von Steuerungssignalen zu steuern. Ein derartiges Feldgerät kann dabei insbesondere zur Verarbeitung der Steuersignale einen Steuerrechner umfassen, an dem ein Konfigurationsspeicher angeschlossen ist. Diese beiden Komponenten sind somit wesentlich für die Steuerung des Feldgeräts. Der Steuerrechner kann weiter mit einer Eingabe-/Ausgabeeinheit des Feldgeräts verbunden sein, über die Sensorsignale zusätzlicher Sensoren übermittelt werden können, beispielsweise Sensoren, die eine Drehzahl eines Aktors des Feldgeräts erfassen oder dergleichen. Darüber hinaus umfasst das Feldgerät auch eine Kommunikationsschnittstelle zur Kommunikation mit der Leitstelle.

Um Manipulationen an dem Feldgerät und insbesondere an dem Steuerrechner und dem Konfigurationsspeicher zu vermeiden, ist es der Anmelderin bekannt geworden, dass diese beiden Komponenten mit einer Vergussmasse, beispielsweise ein Epoxidharz oder dergleichen, versehen werden. Dadurch wird die Zugänglichkeit zu den beiden Komponenten erschwert und ein gewisser Tamperschutz erreicht.

Durch den Tamperschutz des Steuerrechners und des Konfigurationsspeichers sind die im Konfigurationsspeicher abgelegten Konfigurationsdaten, beispielsweise insbesondere kryptographische Schlüssel zur Kommunikation mit der Leitstelle vor Manipulationen geschützt oder deren Manipulation zumindest erschwert.

Ein integrierter Schaltkreis, der über einen Tamperschutz verfügt, ist beispielsweise der ATMEL AT98, dessen Daten unter http//www.datasheetarchive.com/AT98SC008CT-datasheet.html abrufbar sind.

Darüber hinaus ist es der Anmelderin bekannt geworden, Sensoren am Feldgerät anzuordnen, um eine Manipulation des Steuerrechners oder des Konfigurationsspeichers zu erkennen. Diese Sensoren können beispielsweise innerhalb eines Tamper-geschützten Bereichs angeordnet werden oder auch außerhalb. So ist es der Anmelderin beispielweise bekannt geworden, ein Drahtgeflecht im Tamper-geschützten Bereich anzuordnen, welches mit einem entsprechenden Sensor zur Beaufschlagung des Drahtgeflechtes mit elektrischen Signalen verbunden ist. Sollte nun ein Angreifer eine Manipulation am Steuerrechner oder am Konfigurationsspeicher des Feldgeräts vornehmen, beispielsweise durch Anbohren der Vergussmasse, um eine Kontaktierung des Steuerrechners und/oder des Konfigurationsspeichers zum Auslesen von Daten zu erreichen, um diesen manipulieren zu können, wird mit einer bestimmten hohen Wahrscheinlichkeit das Drahtgeflecht dabei zerstört. Um einen effektiven Tamperschutz zu erreichen, ist hierzu eine kontinuierliche Überwachung des Drahtgeflechts durch den entsprechenden Sensor nötig. Andernfalls könnte ein Angreifer das Drahtgeflecht, beispielsweise bei einem ausgeschalteten Gerät, entfernen, das Drahtgeflecht analysieren und ein elektrisch gleichwertiges Drahtgeflecht nachbauen, bevor er das Feldgerät wieder in Betrieb nimmt und sich dieses mit der Leitstelle verbindet. Das Feldgerät selbst und auch die Leitstelle, könnten dann nicht erkennen, ob oder inwieweit das Feldgerät manipuliert wurde.

Eine dauerhafte Überwachung erfordert auch eine entsprechende Energieversorgung, welche zusätzliche Kosten verursacht. Darüber hinaus ist es notwendig, den Zustand der Energieversorgung laufend zu überprüfen, um einen zuverlässigen Tamperschutz des Feldgeräts zu ermöglichen.

Aus der US 7,685,438 ist es bekannt geworden, in eine Schutzschicht einer integrierten Schaltung magnetische Partikel einzubringen. Die magnetischen Partikel können durch Sensoren erfasst und ein kryptographischer Schlüssel anhand der erfassten Informationen über die magnetischen Partikel erstellt werden. Wird die Schutzschicht der integrierten Schaltung entfernt, wird damit auch die zur Generierung des kryptographischen Schlüssels benötigte Information zerstört.

Aus der US 2008/192240 ist es weiter bekannt geworden, eine charakteristische Eigenschaft eines Lichtwellenleiters auszuwerten, um eine physikalische Manipulation des Lichtwellenleiters zu detektierten.

Die Internationale Anmeldung mit der Veröffentlichungsnummer WO 2004/055918 A2 beschreibt ein Verfahren zur manipulationsgeschützten Verpackung von nichtflüchtigen Speichern. Dabei beinhaltet die Verpackung eine Vielzahl magnetischer Partikel, die verursachen, dass magnetische ansprechbare Schaltkreisknoten einen magnetischen Zustand annehmen. Dieser magnetische Zustand wird außerhalb der Verpackung gespeichert und stellt einen unmanipulierten Zustand dar. Wird z.B. ein Teil der Verpackung entfernt, so ändert sich beispielsweise ein magnetischer Zustand und bei einer Echtzeit-Abfrage wird so die Veränderung gegenüber dem gespeicherten unmanipulierten Zustand bemerkt.

Die Internationale Anmeldung mit der Veröffentlichungsnummer WO 2004/078787 A1 beschreibt ein Verpackungsmaterial und eine Methode für eine Überwachung eines Verpackungsmaterials, wobei das Verpackungsmaterial ein elektronisches Modul enthält, umfassend ein Mittel zur elektrischen Energieversorgung, Datenverarbeitung, nichtflüchtigen Datenspeicherung, Zeitnahme und zum Datenempfang, sowie eine Sensoreinrichtung.

Die Veröffentlichung von A-R Sedeghi et al. "Reconfigurable Physical Unclonable Functions - Enabling Technology for Tamper-Resistant Storage" beschreibt den Einsatz von Physical Unclonable Functions, welche rekonfigurierbar ausgestaltet sind.

Eine Aufgabe der vorliegenden Erfindung ist es daher, eine einfache und kostengünstige Tamperschutzvorrichtung bereitzustellen, welche insbesondere auch ohne eine ununterbrochene Überwachung zuverlässig eine physikalische Manipulation eines mit der Tamperschutzvorrichtung versehenen Feldgeräts ermöglicht.

Diese Aufgabe wird durch eine Tamperschutzvorrichtung zum Tamperschutz eines Feldgeräts gelöst, umfassend einen Tamperschutzträger und zumindest einen elektronischen Speicher, wobei der zumindest eine elektronische Speicher in zumindest einem Teilbereich auf dem Tamperschutzträger angeordnet ist und der zumindest eine elektronische Speicher zumindest eine vorgebbare Sicherheitsinformation speichert und wobei der zumindest eine elektronische Speicher ausgebildet, ist, bei einer zumindest teilweisen Beschädigung der Tamperschutzvorrichtung die vorgebbare Scherheitsinformation zu verändern.

Die Aufgabe wird ebenfalls durch ein Verfahren zur Herstellung eines Feldgeräts mit einer Tamperschutzvorrichtung gemäß zumindest einem der Ansprüche 1 bis 6 gelöst, umfassend die Schritte Herstellen des Feldgeräts, Herstellen der Tamperschutzvorrichtung, Anordnen der Tamperschutzvorrichtung an dem Feldgerät, und Verbinden der Tamperschutzvorrichtung mit einer Überwachungseinrichtung zum Überwachen der Tamperschutzvorrichtung.

Die Aufgabe wird ebenfalls durch ein Feldgerät, umfassend eine Tamperschutzvorrichtung gemäß zumindest einem der Ansprüche 1 bis 6 gelöst.

Die Aufgabe wird ebenfalls durch ein Tamperschutzsystem gelöst, umfassend zumindest ein Feldgerät, zumindest eine Tamperschutzvorrichtung gemäß zumindest einem der Ansprüche 1-6, zumindest eine Überwachungsvorrichtung, wobei die Tamperschutzvorrichtung an dem Feldgerät zum Tamperschutz angeordnet ist und wobei die Überwachungsvorrichtung mit der Tamperschutzvorrichtung verbunden ist.

Schließlich wird die Aufgabe auch durch die Verwendung einer Tamperschutzvorrichtung gemäß zumindest einem der Ansprüche 1-6 in/oder an einem Feldgerät sowie die Verwendung einer Tamperschutzvorrichtung gemäß zumindest einem der Ansprüche 1-6 als Sicherheitssiegel gelöst.

Der erzielte Vorteil dabei ist, dass damit eine Tamperschutzvorrichtung bereitgestellt wird, welche bei einer physikalischen Manipulation, beispielsweise einem Anbohren, Aufbrechen oder dergleichen irreparabel zerstört wird. Die Sicherheitsinformation in dem durch die physikalische Manipulation zumindest teilweise zerstörten elektronischen Speicher der Tamperschutzvorrichtung kann so nicht mehr rekonstruiert werden. Auf diese Weise ist eine physikalische Manipulation eines Feldgeräts mit einer derartigen Tamperschutzvorrichtung anhand der zerstörten Sicherheitsinformation erkennbar. Ein weiterer Vorteil ist, dass eine kontinuierliche oder laufende Überwachung des Tamperschutzes nicht notwendig ist, da eine physikalische Manipulation auch später anhand des modifizierten oder zerstörten Speicherinhalts und damit einer veränderten Sicherheitsinformation erkennbar ist. Ein weiterer Vorteil ist schließlich, dass dabei keine aufwändige Sensorik, wie beispielsweise Drucksensoren, Strahlungssensoren, Temperatursensoren oder ähnliches bereitgestellt werden müssen, was die Herstellungskosten reduziert.

Weitere Merkmale und Vorteile der Erfindung sind in den Unteransprüchen beschrieben.

Vorteilhafterweise ist der Tamperschutzträger als Folie, insbesondere als Kunststofffolie ausgebildet. Der damit erzielte Vorteil ist, dass damit auf einfache und kostengünstige Weise der zumindest eine elektronische Speicher auf dem Tamperschutzträger angeordnet werden kann und gleichzeitig eine einfache Anordnung der Folie, beispielsweise auf einer Leiterplatte, ermöglicht wird. Der zumindest eine elektronische Speicher kann dabei beispielsweise als auf die Folie gedruckte elektronische Schaltung ausgebildet sein. Der Speicher kann insbesondere flächig auf der Folie aufgedruckt sein, und so zumindest einen Teilbereich der Folie abdecken. Weiterhin kann der Speicher in mehreren, voneinander isolierten Schichten übereinander aufgedruckt ausgebildet sein.

Die Folie kann weiter auf einen Träger, beispielsweise eine Leiterplatte geklebt sein. Auch kann die Folie um die Leiterplatte herumgeschlagen werden und verklebt oder verschweißt sein. Eine mit der Leiterplatte stoffschlüssig verbundene Folie kann weiterhin durch aufgebrachtes Epoxyd-Harz geschützt sein und/oder in Epoxyd-Harz vergossen sein.

Zweckmäßigerweise ist der zumindest eine elektronische Speicher ausgebildet, die Sicherheitsinformation permanent oder veränderbar zu speichern. Der erzielte Vorteil dabei ist, dass bei einem permanenten Speichern der Sicherheitsinformation in dem elektronischen Speicher diese direkt beim Herstellen des Speichers, beispielsweise mittels des genannten Aufdruckens der elektronischen Schaltung, in diesem gespeichert werden kann, so dass eine einfache und kostengünstige Speicherung der Sicherheitsinformation ermöglicht wird. Ist die Sicherheitsinformation in dem zumindest einem elektronischen Speicher veränderbar, beispielsweise während eines Betriebs des Feldgeräts, so kann die Sicherheitsinformation, täglich, stündlich, minütlich oder dergleichen neu erstellt und/oder überschrieben werden. Darüber hinaus ist auch ein kontinuierliches Überschreiben des elektronischen Speichers mit neuen Sicherheitsinformationen möglich. Auf diese Weise kann die Sicherheit noch weiter erhöht werden, da nun anhand des im Wesentlichen ständigen Aktualisierens des zumindest einen elektronischen Speichers auch festgestellt werden kann, wann die jeweilige Sicherheitsinformation in dem zumindest einem elektronischen Speicher gespeichert wurde und wann eine physikalische Manipulation des zumindest einen elektronischen Speichers erfolgt ist: Nach einer physikalischen Manipulation der Tamperschutzvorrichtung kann die Sicherheitsinformation nicht mehr weiter verändert werden, da der zumindest eine elektronische Speicher ganz oder teilweise zerstört wurde. Ist gleichzeitig bekannt, welche Sicherheitsinformationen wann in den zumindest einen elektronischen Speicher geschrieben wurde, kann dann der Zeitpunkt der physikalischen Manipulation ermittelt werden.

Vorteilhafterweise ist der zumindest eine elektronische Speicher ausgebildet, eine von der Sicherheitsinformation abhängige und von ihr verschiedene zweite Information bereitzustellen. Auf diese Weise kann beispielsweise anhand der Sicherheitsinformation ein kryptographischer Schlüssel direkt und/oder mittels einer Schlüsselableitungsfunktion und/oder einer kryptographischen Hash-Funktion, insbesondere SHA-1, SHA256, HMAC-SHA-1, HMAC-SHA256 erzeugt werden. Diese kann beispielsweise dazu verwendet werden, um eine Entschlüsselung von Daten des Feldgeräts durchzuführen und alternativ oder zusätzlich kann bei der Erstellung des kryptographischen Schlüssels ein Fehlererkennungs- und/oder ein Fehlerkorrekturverfahren angewendet werden, sodass veränderte Inhalte eines Konfigurationsspeichers des Feldgeräts erkennbar und insbesondere zumindest teilweise korrigierbar sind.

Die Sicherheitsinformation kann als eine digital codierte Bitfolge ausgebildet sein.

Zweckmäßigerweise weist die Sicherheitsinformationsdichte der Sicherheitsinformation eine Größe von zumindest 32 Bit, insbesondere zumindest 64 Bit, vorzugsweise zumindest 128 Bit, zweckmäßigerweise zumindest 256 Bit, insbesondere zumindest 512 Bit, besonders vorzugsweise zumindest 1024 Bit auf, insbesondere pro einer Einheitsfläche, wobei die Einheitsfläche weniger als 5 cm², insbesondere weniger als 2,5 cm², vorzugsweise weniger als 1 cm², zweckmäßigerweise weniger als 5 mm², besonders vorzugsweise weniger als 1 mm² beträgt. Dadurch ist zum einen die in dem zumindest in einem elektronischen Speicher gespeicherte Sicherheitsinformation nicht praktikabel erratbar. Darüber hinaus wird ein noch höherer Schutz gegen physikalische Manipulation erreicht, da bei einer räumlich kleinen physikalischen Manipulation der Tamperschutzvorrichtung bereits viele Bits der Sicherheitsinformation durch die physikalische Manipulation des elektronischen Speichers modifiziert oder zerstört werden.

Vorteilhafterweise ist eine Mehrzahl von elektronischen Speichern angeordnet, die ausgebildet sind, eine gemeinsame Sicherheitsinformation bereitzustellen. Auf diese Weise kann der Speicherbedarf der elektronischen Speicher erheblich reduziert werden, sodass diese noch kostengünstiger und zuverlässiger hergestellt werden können.

Zweckmäßigerweise ist bei dem Tamperschutzsystem die Überwachungsvorrichtung ausgebildet, eine Sicherheitsinformation der Tamperschutz-Überwachungsvorrichtung zu prüfen und in Abhängigkeit des Ergebnisses des Prüfers das Feldgerät zu inaktivieren oder zu aktivieren.

Der damit erzielte Vorteil ist, dass insbesondere wenn die Überwachungsvorrichtung in Feldgerät selbst angeordnet ist, das Feldgerät selbst von einem aktiven in einen inaktiven Zustand wechseln kann, so dass einem Angreifer ein weiterer Zugriff auf das Feldgerät weiter erschwert wird, falls die Prüfung eine Manipulation der Sicherheitsinformation ergibt. Das Feldgerät kann dann selbsttätig beispielsweise in einem Konfigurationsspeicher gespeicherte Schlüssel löschen oder eine Statusmeldung bereitstellen und/oder an eine Leitstelle übertragen oder mittels eines Kurzschlusses elektronische Komponenten des Feldgerätes permanent zerstören, um einen Zugriff auf diese zu verhindern.

Weitere Merkmale und Vorteile der Erfindung ergeben sich aus der nachfolgenden Beschreibung von Ausführungsbeispielen anhand der Zeichnung.

### Dabei zeigen in schematischer Form

- Fig. 1: ein Feldgerät mit einer Tamperschutzvorrichtung gemäß einer ersten Ausführungsform der vorliegenden Erfindung; und
- Fig. 2: Schritte eines Verfahrens zur Herstellung eines Feldgeräts mit einer Tamperschutzvorrichtung gemäß der ersten Ausführungsform.

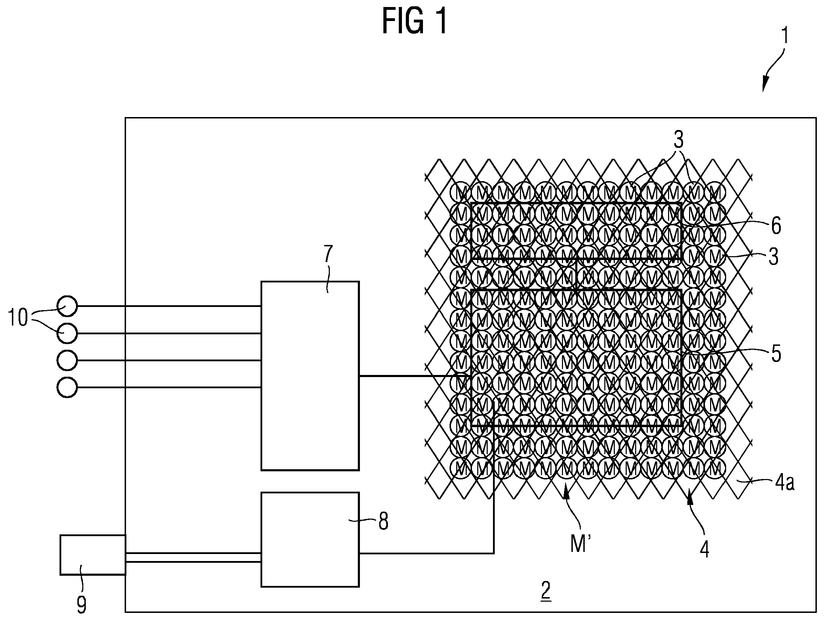

Fig. 1 zeigt ein Feldgerät mit einer Tamperschutzvorrichtung gemäß einer ersten Ausführungsform der vorliegenden Erfindung.

In Fig. 1 bezeichnet Bezugszeichen 1 ein Feldgerät. Das Feldgerät 1 umfasst einen Träger 2, beispielsweise in Form einer Leiterplatte. Auf dem Träger 2 ist ein Steuerrechner 5, beispielsweise eine CPU oder dergleichen angeordnet, die mit einem Konfigurationsspeicher 6 zum Austausch von Daten verbunden ist. Weiterhin ist der Steuerrechner 5 über eine Leitung mit einem Netzwerkbaustein 8 verbunden, der wiederum eine Schnittstelle 9 zum Übertragen von Daten zu einer Leitstelle, beispielsweise via Ethernet, bereitstellt.

Der Steuerrechner 5 ist weiter über eine Leitung mit einer Ein-/Ausgabeeinheit 7 verbunden. Die Ein-/Ausgabeeinheit 7 ist mit Sensoren und/oder Aktoren 10, beispielsweise Temperaturfühlern, Stellgliedern, etc. verbunden. Ist beispielsweise das Feldgerät 1 als Signalanlage für Züge ausgebildet, kann die Ein-/Ausgabeeinheit mittels des Steuerrechners 5 entsprechende Befehle an Motoren 10 etc. der Signalanlage übermitteln. Gleichzeitig kann mittels der Sensoren 10 überprüft werden, ob die Signalanlage die vom Steuerrechner 5 erhaltene Anweisung ordnungsgemäß durchgeführt hat.

In Fig. 1 ist weiterhin ein gepunkteter rechteckförmiger Bereich zu erkennen, der im Wesentlichen den Steuerrechner 5 und den Konfigurationsspeicher 6 überdeckt. In diesem Bereich ist eine Tamperschutzvorrichtung 4 angeordnet. Die Tamperschutzvorrichtung 4 umfasst als Tamperschutzträger eine Tamperschutzfolie 4a, auf der insbesondere in regelmäßiger Weise elektronische Speicher 3 angeordnet sind. Die Tamperschutzfolie 4a mit den elektronischen Speichern 3 ist dabei so angeordnet, dass die elektronischen Speicher 3 den Steuerrechner 5 sowie den Konfigurationsspeicher 6 vollständig überdecken und so einen Tamperschutz für diese beiden Komponenten bereitstellen. Nicht dargestellt in Fig. 1 sind jeweilige Verbindungen der einzelnen elektronischen Speicher untereinander sowie zumindest eine Verbindung der elektronischen Speicher 3 zu einer Schnittstelle des Steuerrechners 5 und/oder des Konfigurationsspeichers 6, um die in den elektronischen Speichern gespeicherten Sicherheitsinformation M abrufen oder auslesen zu können. Hierüber kann dann der Konfigurationsspeicher 6 und/oder der Steuerrechner 5 beispielsweise über einen I2C-Bus oder SPI die Sicherheitsinformationen M der elektronischen Speicher 3 auslesen und, beispielsweise in Abhängigkeit der ausgelesenen Sicherheitsinformation M oder der ausgelesenen Sicherheitsinformationen M, einen kryptographischen Schlüssel erstellen, der dazu verwendet werden kann, um im Konfigurationsspeicher 6 verschlüsselt abgelegte Konfigurationsdaten des Feldgeräts 1 zu entschlüsseln.

Es ist weiter möglich, die Tamperschutzvorrichtung 4 derart auszubilden, dass diese nicht den Speicherinhalt der elektronischen Speicher 3 direkt bereitstellt, sondern einen davon abhängigen Wert. So kann beispielsweise die Tamperschutzvorrichtung 4 ausgebildet sein, einen Verarbeitungsschritt zur Verwendung der Sicherheitsinformation M der elektronischen Speicher 3 durchzuführen, wobei dann das Ergebnis dieses Verarbeitungsschrittes als Sicherheitsinformation M' bereitgestellt wird. Auf diese Weise ist es möglich, ein Challenge-Response-Verfahren durchzuführen, wobei die Tamperschutzvorrichtung 4 eine Response bereitstellt, die von in den elektronischen Speichern 3 der Tamperschutzvorrichtung 4 gespeicherten Daten und dem an die Tamperschutzvorrichtung 4 übertragenen Challenge-Wert abhängt. Der Response-Wert kann beispielsweise eine identische Kopie von der Tamperschutzvorrichtung 4 bereitgestellten Sicherheitsinformation M' sein, eine Prüfsumme, insbesondere eine CRC-Prüfsumme oder ein Hash-Wert, beispielsweise SHA-1.

Des Weiteren ist es möglich, dass die in den elektronischen Speichern 3 gespeicherten Sicherheitsinformationen M zufällig oder pseudozufällig erzeugt werden.

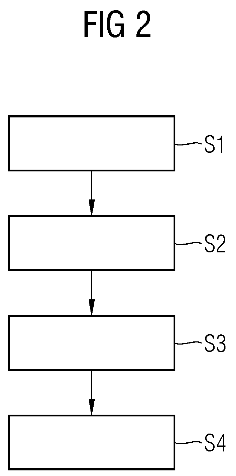

Fig. 2 zeigt Schritte eines Verfahrens zur Herstellung eines Feldgeräts mit einer Tamperschutzvorrichtung gemäß der ersten Ausführungsform.

In Fig. 2 bezeichnet Bezugszeichen S1 den Schritt Herstellen des Feldgeräts 1, Bezugszeichen S2 den Schritt Herstellen der Tamperschutzvorrichtung 4, Bezugszeichen S3 Anordnen der Tamperschutzvorrichtung 4 an dem Feldgerät 1 und Bezugszeichen S4 Verbinden der Tamperschutzvorrichtung 4 mit einer Überwachungseinrichtung zum Überwachen der Tamperschutzvorrichtung.

Zusammenfassend weist die Erfindung mehrere Vorteile auf. Die Erfindung ermöglicht die Erkennung einer physikalischen Manipulation eines Feldgeräts, ohne dass eine kontinuierliche Überwachung notwendig ist. Auf diese Weise wird beispielweise keine dauerhafte Stromversorgung benötigt. Darüber hinaus ist die Tamperschutzvorrichtung auch einfach und kostengünstig herstellbar, beispielsweise mittels druckbarer Elektronik und/oder druckbarem Speicher. Ein weiterer Vorteil ist, dass dadurch auch ein grossflächigerer Schutz erreicht werden kann. Ein weiterer Vorteil ist, dass eine aufwändige Sensorik zum Erfassen einer physikalischen Manipulation entfällt. Darüber hinaus ist ein erhöhter Schutz durch die Tamperschutzvorrichtung gegenüber physikalischen Manipulationen über die bereits bekannten Tamperschutzvorrichtungen hinaus gegeben.

Obwohl die vorliegende Erfindung vorstehend anhand bevorzugter Ausführungsbeispiele beschrieben wurde, ist sie nicht darauf beschränkt, sondern auf vielfältige Weise modifizierbar.

## Patentansprüche

1. Tamperschutzvorrichtung (4) zum Tamperschutz eines Feldgeräts (1), umfassend
einen Tamperschutzträger (4a), wobei der Tamperschutzträger (4a) als Folie ausgebildet ist, und zumindest einen elektronischen Speicher (3), wobei der zumindest eine elektronische Speicher (3) in zumindest einem Teilbereich auf dem Tamperschutzträger (4a) angeordnet ist und
der zumindest eine elektronische Speicher (3) zumindest eine vorgebbare Sicherheitsinformation (M) speichert und wobei
der zumindest eine elektronische Speicher (3) ausgebildet ist, bei einer zumindest teilweisen Beschädigung der Tamperschutzvorrichtung (4) die vorgebbare Sicherheitsinformation (M) zu verändern.

2. Tamperschutzvorrichtung gemäß Anspruch 1,
**dadurch gekennzeichnet, dass**
der Tamperschutzträger (4a) als Kunststofffolie ausgebildet ist.

3. Tamperschutzvorrichtung gemäß zumindest einem der Ansprüche 1-2,
**dadurch gekennzeichnet, dass**
der zumindest eine elektronische Speicher (3) ausgebildet ist, die Sicherheitsinformation (M) permanent oder veränderbar zu speichern.

4. Tamperschutzvorrichtung gemäß zumindest einem der Ausprüche 1-3,
**dadurch gekennzeichnet, dass**
der zumindest eine elektronische Speicher (3) ausgebildet ist, eine von der Sicherheitsinformation (M) abhängige und von ihr verschiedene zweite Information bereitzustellen.

5. Tamperschutzvorrichtung gemäß zumindest einem der Ansprüche 1-4,
**dadurch gekennzeichnet, dass**
die Sicherheitsinformation (M) eine Größe von zumindest 32bit, insbesondere zumindest 64 Bit, vorzugsweise zumindest 128 Bit, zweckmäßigerweise zumindest 256 Bit, insbesondere zumindest 512 Bit, besonders vorzugsweise zumindest 1024 Bit auf, insbesondere pro einer Einheitsfläche, wobei die Einheitsfläche weniger als 5 cm², insbesondere weniger als 2,5 cm², vorzugsweise weniger als 1 cm², zweckmäßigerweise weniger als 5 mm², besonders vorzugsweise weniger als 1 mm² beiträgt.

6. Tamperschutzvorrichtung gemäß zumindest einem der Ansprüche 1-5,
**dadurch gekennzeichnet, dass**
eine Mehrzahl von elektronischen Speichern (3) angeordnet ist, die ausgebildet sind, eine gemeinsame Sicher heitsinformation (M') bereitzustellen.

7. Verfahren zur Herstellung eines Feldgeräts (1) mit einer Tamperschutzvorrichtung (4) gemäß zumindest einem der Ansprüche 1-6, umfassend die Schritte
• Herstellen (S1) des Feldgeräts (1)
• Herstellen (S2) der Tamperschutzvorrichtung (4)
• Anordnen (S3) der Tamperschutzvorrichtung (4) an dem Feldgerät (1)
• Verbinden (S4) der Tamperschutzvorrichtung (4) mit einer Überwachungseinrichtung (5,6) zum Überwachen der Tamperschutzvorrichtung (4)

8. Feldgerät (1) umfassend eine Tamperschutzvorrichtung (4) gemäß zumindest einem der Ansprüche 1-6.

9. Tamperschutzsystem, umfassend
zumindest ein Feldgerät (1),
zumindest eine Tamperschutzvorrichtung (4) gemäß zumindest einem der Ansprüche 1-6,
zumindest eine Überwachungsvorrichtung (5,6), wobei die Tamperschutzvorrichtung (4) an dem Feldgerät (1) zum Tamperschutz angeordnet ist und wobei
die Überwachungsvorrichtung (5,6) mit der Tamperschutzvorrichtung (4) verbunden ist.

10. Tamperschutzsystem gemäß Anspruch 9, **dadurch gekennzeichnet, dass** die Überwachungsvorrichtung (5,6) ausgebildet ist, eine Sicherheitsinformation (M) der Tamperschutz-Überwachungsvorrichtung (4) zu prüfen und in Abhängigkeit des Ergebnisses des Prüfens das Feldgerät (1) zu inaktivieren oder zu aktivieren.

11. Verwendung einer Tamperschutzvorrichtung (4) gemäß zumindest einem der Ansprüche 1-6 in und/oder an einem Feldgerät (1).

12. Verwendung einer Tamperschutzvorrichtung (4) gemäß zumindest einem der Ansprüche 1-6 als Sicherheitssiegel.

## Claims

1. Tamper protection device (4) for protecting a field device (1) against tampering, comprising
a tamper protection carrier (4a), wherein the tamper protection carrier (4a) is designed as a foil, and
at least one electronic memory (3), wherein
the at least one electronic memory (3) is disposed in at least one partial area on the tamper protection carrier (4a), and
the at least one electronic memory (3) stores at least one predefinable security information item (M), and
wherein
the at least one electronic memory (3) is designed to modify the predefinable security information item (M) in the event of at an least partial damage to the tamper protection device (4).

2. Tamper protection device according to Claim 1,
**characterized in that**
the tamper protection carrier (4a) is designed as a plastic foil.

3. Tamper protection device according to at least one of Claims 1-2,
**characterized in that**
the at least one electronic memory (3) is designed to store the security information (M) permanently or modifiably.

4. Tamper protection device according to at least one of Claims 1-3,
**characterized in that**
the at least one electronic memory (3) is designed to provide a second information item dependent on and different from the security information (M).

5. Tamper protection device according to at least one of Claims 1-4,
**characterized in that**
the security information (M) has a size of at least 32 bits, in particular at least 64 bits, preferably at least 128 bits, appropriately at least 256 bits, in particular at least 512 bits, particularly preferably at least 1024 bits, in particular for each unit area, wherein the unit area is less than 5 cm², in particular less than 2.5 cm², preferably less than 1 cm², appropriately less than 5 mm², particularly preferably less than 1 mm².

6. Tamper protection device according to at least one of Claims 1-5,
**characterized in that**
a plurality of electronic memories (3) are disposed, which are designed to provide a common security information item (M').

7. Method for manufacturing a field device (1) with a tamper protection device (4) according to at least one of Claims 1-6, comprising the following steps:
• manufacturing (S1) the field device 1,
• manufacturing (S2) the tamper protection device (4),
• disposing (S3) the tamper protection device (4) on the field device (1)
• connecting (S4) the tamper protection device (4) to a monitoring device (5, 6) to monitor the tamper protection device (4)

8. Field device (1) comprising a tamper protection device (4) according to at least one of Claims 1-6.

9. Tamper protection system, comprising
at least one field device (1),
at least one tamper protection device (4) according to at least one of Claims 1-6,
at least one monitoring device (5, 6), wherein the tamper protection device (4) is disposed on the field device (1) for the tamper protection, and wherein
the monitoring device (5, 6) is connected to the tamper protection device (4).

10. Tamper protection system according to Claim 9, **characterized in that** the monitoring device (5, 6) is designed to check a security information item (M) of the tamper protection monitoring device (4) and to de-activate or activate the field device (1) depending on the result of the check.

11. Use of a tamper protection device (4) according to at least one of Claims 1-6 in and/or on a field device (1).

12. Use of a tamper protection device (4) according to at least one of Claims 1-6 as a security seal.

## Revendications

1. Dispositif de protection anti-manipulation (4) pour la protection anti-manipulation d'un appareil de terrain (1), comprenant un support de protection anti-manipulation (4a), dans lequel le support de protection anti-manipulation (4a) est configuré en tant que feuille, et au moins une mémoire électronique (3), dans lequel l'au moins une mémoire électronique (3) est disposée dans au moins un secteur partiel sur le support de protection anti-manipulation (4a) et l'au moins une mémoire électronique (3) mémorise au moins une information de sécurité (M) apte à être prédéfinie et dans lequel l'au moins une mémoire électronique (3) est configurée pour modifier lors d'un endommagement au moins partiel du dispositif de protection anti-manipulation (4) l'information de sécurité (M) apte à être prédéfinie.

2. Dispositif de protection anti-manipulation selon la revendication 1, **caractérisé en ce que** le support de protection anti-manipulation (4a) est configuré en tant que feuille en matière plastique.

3. Dispositif de protection anti-manipulation selon au moins l'une des revendications 1-2, **caractérisé en ce que** l'au moins une mémoire électronique (3) est configurée pour mémoriser l'information de sécurité (M) de manière définitive ou modifiable.

4. Dispositif de protection anti-manipulation selon au moins l'une des revendications 1-3, **caractérisé en ce que** l'au moins une mémoire électronique (3) est configurée pour mettre à disposition une deuxième information dépendante de l'information de sécurité (M) et différente de celle-ci.

5. Dispositif de protection anti-manipulation selon au moins l'une des revendications 1-4, **caractérisé en ce que** l'information de sécurité (M) présente une taille d'au moins 32 bits, en particulier d'au moins 64 bits, de préférence d'au moins 128 bits, de manière appropriée d'au moins 256 bits, en particulier d'au moins 512 bits, de manière particulièrement préférée d'au moins 1024 bits, en particulier pour une surface unitaire, dans lequel la surface unitaire est inférieure à 5 cm², en particulier inférieure à 2,5 cm², de préférence inférieure à 1 cm², de manière appropriée inférieure à 5 mm², de manière particulièrement préférée inférieure à 1 mm².

6. Dispositif de protection anti-manipulation selon au moins l'une des revendications 1-5, **caractérisé en ce qu'**une pluralité de mémoires électroniques (3) sont disposées, lesquelles sont configurées pour mettre à disposition une information de sécurité (M') commune.

7. Procédé de fabrication d'un appareil de terrain (1) avec un dispositif de protection anti-manipulation (4) selon au moins l'une des revendications 1-6, comprenant les étapes consistant à
• fabriquer (S1) l'appareil de terrain (1)
• fabriquer (S2) le dispositif de protection anti-manipulation (4)
• disposer (S3) le dispositif de protection anti-manipulation (4) au niveau de l'appareil de terrain (1)
• relier (S4) le dispositif de protection anti-manipulation (4) avec un dispositif de surveillance (5, 6) pour la surveillance du dispositif de protection anti-manipulation (4).

8. Appareil de terrain (1) comprenant un dispositif de protection anti-manipulation (4) selon au moins l'une des revendications 1-6.

9. Système de protection anti-manipulation, comprenant au moins un appareil de terrain (1),
au moins un dispositif de protection anti-manipulation (4) selon au moins l'une des revendications 1-6,
au moins un dispositif de surveillance (5, 6), dans lequel le dispositif de protection anti-manipulation (4) est disposé au niveau de l'appareil de terrain (1) pour une protection anti-manipulation et dans lequel le dispositif de surveillance (5, 6) est relié au dispositif de protection anti-manipulation (4).

10. Système de protection anti-manipulation selon la revendication 9, **caractérisé en ce que** le dispositif de surveillance (5, 6) est configuré pour vérifier une information de sécurité (M) du dispositif de protection anti-manipulation et de surveillance (4) et pour désactiver ou activer l'appareil de terrain (1) en fonction du résultat de la vérification.

11. Utilisation d'un dispositif de protection anti-manipulation (4) selon au moins l'une des revendications 1-6 et/ou au niveau d'un appareil de terrain (1).

12. Utilisation d'un dispositif de protection anti-manipulation (4) selon au moins l'une des revendications 1-6 en tant que sceau de sécurité.
